# EUROPEAN PATENT SPECIFICATION

(11) **EP 3 981 831 B1**
(45) Date of publication and mention of the grant of the patent: **18.02.2026**
(21) Application number: 20819242.7
(22) Date of filing: 03.06.2020
(51) Int. Cl.: B29C 73/16, C08K 5/40, C08L 23/22, C08L 23/28, C08L 91/00, B29D 30/06, B60C 1/00, B60C 5/14, B60C 19/12, C08K 3/06, C08K 5/33, C08K 5/378

(54) **SEALANT MATERIAL COMPOSITION**
DICHTUNGSSTOFFZUSAMMENSETZUNG
COMPOSITION DE MATÉRIAU D'ÉTANCHÉITÉ

(30) Priority: 04.06.2019 JP 2019104788; 06.08.2019 JP 2019144379
(43) Date of publication of application: 13.04.2022
(73) Proprietor: The Yokohama Rubber Co., Ltd., Hiratsuka-shi, Kanagawa 254-8601 (JP)
(72) Inventor: TAKAHASHI, Kiyohito, Hiratsuka-shi, Kanagawa 254-8601 (JP)
(74) Representative: Grünecker Patent- und Rechtsanwälte PartG mbB
(86) International application number: PCT/JP2020/021958
(87) International publication number: WO 2020/246506

(56) References cited:
- EP-A1- 0 135 463
- EP-A1- 3 315 548
- WO-A1-2016/060233
- JP-A- 2017 101 096
- JP-A- S5 316 203
- JP-A- S5 742 753
- JP-A- S5 915 442
- JP-A- S52 145 904
- JP-A- S6 064 834
- US-A1- 2009 078 353

## Description

### Technical Field

The present invention relates to a sealant material composition forming a sealant layer of a self-sealing type pneumatic tire including the sealant layer in a tire inner surface.

### Background Art

In a known pneumatic tire, a sealant layer is provided in an inner side in a tire radial direction of an innerliner layer in a tread portion (for example, see Patent Document 1). In such a pneumatic tire, when a foreign substance such as a nail or the like penetrates into the tread portion, the sealant flows into the through-hole, which makes it possible to suppress reduction in air pressure and to maintain travel.

In the self-sealing type pneumatic tire described above, when the viscosity of the sealant is lower, since the sealant easily flows into the through-hole, improvement of sealing properties can be expected; however, in a case where the sealant flows toward a tire center side due to the effects of heat and centrifugal force applied during travel and, as a result, the through-hole deviates from a tire center region, there is concern that the sealant becomes insufficient and sealing properties cannot be obtained sufficiently. On the other hand, when the viscosity of the sealant is high, a flow of the sealant described above can be prevented, but the sealant becomes difficult to flow into the through-hole, and there is concern that the sealing properties decrease. Thus, it is difficult to ensure good sealing properties while suppressing flow of the sealant due to traveling, and there is a demand for a measure for providing these performances in a well-balanced, compatible manner by improving the physical properties of the sealant material composition that forms the sealant layer. Furthermore, because the sealant layer is held in the tire unless a foreign material such as a nail or the like penetrates into the tread portion, it is also required to maintain the performance for a long term, e.g., to suppress oxidation degradation and maintain good sealing properties. Patent Document 2 discloses a pneumatic tire and a method for manufacturing such a tire. In this method of manufacturing such a pneumatic rubber tire a polymer composition layer is built into the tire in a relatively conventional manner. Under the conditions of heat and pressure used to cure the tire this polymer composition is both crosslinked and depolymerized to form a tacky material. Patent Document 3 discloses a rubber composition for sealants and a pneumatic tire (self-sealing tire) including the rubber composition. The invention relates to a rubber composition for sealants, having a difference in viscosity at -20°C of 4.0 kPa · s or less between measurements before and after storage at 25°C for any 10-day period within a period of 60 days after production of the rubber composition.

### Citation List

### Patent Literature

Patent Document 1: JP 2006-152110 A
Patent Document 2: EP 0135463 A1
Patent Document 3: EP 3315548 A1

### Summary of Invention

### Technical Problem

An object of the present invention is to provide a sealant material composition that makes it possible to ensure good sealing properties and to suppress flow of sealant due to traveling.

### Solution to Problem

The sealant material composition according to an embodiment of the present invention that achieves the object described above is a sealant material composition forming a sealant layer disposed on an inner surface of a pneumatic tire, the sealant material composition containing from 1 part by mass to 40 parts by mass of an organic peroxide and from 0.1 parts by mass to 40 parts by mass of a crosslinking agent, being blended, per 100 parts by mass of a rubber component containing greater than 10 mass% of a non-halogenated butyl rubber, wherein from 50 parts by mass to 400 parts by mass of a liquid polymer is blended, per 100 parts by mass of the rubber component, wherein the liquid polymer is paraffin oil with a molecular weight of 800 or greater, and wherein the sealant material composition further comprises a crosslinking aid.

### Advantageous Effects of Invention

Because the sealant material composition according to an embodiment of the present invention has the blend described above, when the sealant material composition is used in a sealant layer for a pneumatic tire, a flow of sealant due to traveling can be suppressed while good sealing properties are ensured. **In** particular, by allowing the greater than 10 mass% of the non-halogenated butyl rubber to be contained and performing crosslinking by using a combination of the crosslinking agent and the organic peroxide, an adequate elasticity that does not cause a flow during travel can be obtained while viscosity adequate to obtain good sealing properties is ensured, and such performances can be provided in a well-balanced, compatible manner. Furthermore, due to low reactivity of the non-halogenated butyl rubber, oxidation degradation can be suppressed, and good sealing properties can be maintained.

**In** an embodiment of the present invention, the rubber component preferably contains a halogenated butyl rubber besides the non-halogenated butyl rubber. By using the non-halogenated butyl rubber and the halogenated butyl rubber in combination as described above, good processability can be achieved. Furthermore, difference in physical properties, such as viscosity and elasticity, is caused depending on a portion of the sealant composition (sealant layer) after vulcanization due to difference in vulcanization rates of these rubbers, and this is advantageous to provide good sealing properties and adequate fluidity in a well-balanced, compatible manner.

**In** an embodiment of the present invention, the crosslinking agent preferably includes a sulfur component. This increases reactivity of the rubber component (halogenated butyl rubber) with the crosslinking agent (sulfur) and the organic peroxide, and the sealant material composition can provide improved processability.

**In** the present invention, from 50 parts by mass to 400 parts by mass of a liquid polymer is blended, per 100 parts by mass of the rubber component. At this time, the liquid polymer is paraffin oil. Furthermore, the molecular weight of the paraffin oil is 800 or more. Accordingly, adequately high viscosity can be imparted to the rubber component, and thus it is advantageous to improve sealing properties.

**In** the present invention, a crosslinking aid is contained. At this time, the crosslinking aid is preferably a thiazole-based compound or a thiuram-based compound. Furthermore, the blended amount of the crosslinking aid is preferably from 50 mass% to 400 mass% of the blended amount of the crosslinking agent. This allows the vulcanization rate to be increased, which can enhance productivity.

**In** a pneumatic tire including the sealant layer formed of the sealant material composition according to an embodiment of the present invention described above, by excellent physical properties of the sealant material composition described above, ensuring of sealing properties and suppression of fluidity of the sealant can be provided in a well-balanced, compatible manner.

### Brief Description of Drawings

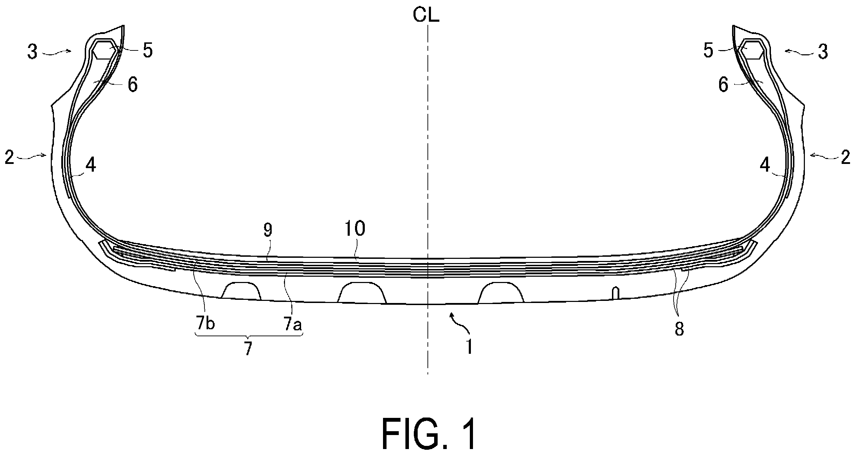

FIG. 1 is a meridian cross-sectional view illustrating a self-sealing type pneumatic tire according to an embodiment of the present invention.

### Description of Embodiments

Configurations of embodiments of the present invention will be described in detail below with reference to the accompanying drawings.

A rubber component in a sealant material composition according to an embodiment of the present invention always contains a non-halogenated butyl rubber. Examples of the non-halogenated butyl rubber include unmodified butyl rubber normally used in a sealant material composition, such as BUTYL-065 available from JSR Corporation, and BUTYL-301 available from LANXESS AG. The blended amount of the non-halogenated butyl rubber is greater than 10 mass%, and preferably 10 mass% or greater and 50 mass% or less, per 100 mass% of the rubber component. By using the non-halogenated butyl rubber in this manner, the rubber component and a crosslinking agent or an organic peroxide described below suitably react, and this is advantageous in that ensuring of sealing properties and suppression of a flow of the sealant are provided in a compatible manner.

In the sealant material composition of an embodiment of the present invention, not all the rubber component is required to be the non-halogenated butyl rubber. As another rubber, one or more selected from natural rubber, halogenated butyl rubber, butadiene rubber, and styrene-butadiene rubber may be used in combination. Among these, combined use with a halogenated butyl rubber is particularly preferred. Examples of the halogenated butyl rubber include halogenated butyl rubbers typically used in a sealant material composition, such as chlorinated butyl rubber and brominated butyl rubber. Reactivity of the rubber component and a crosslinking agent or an organic peroxide described below increases by using the halogenated butyl rubber as described above, and this is advantageous in that ensuring of sealing properties and suppression of a flow of the sealant are provided in a compatible manner. Additionally, the processability of the sealant material composition can also improve.

**In** a case where another rubber besides the non-halogenated butyl rubber is used together, the blended amount of such another rubber is less than 90 mass%, and preferably 30 mass% or greater and 80 mass% or less, per 100 mass% of the rubber component. **In** particular, in a case where the halogenated butyl rubber is used together, a chlorinated butyl rubber is preferably contained in the halogenated butyl rubber, and the proportion of the chlorinated butyl rubber in the halogenated butyl rubber is preferably 1 mass% or greater, and more preferably 10 mass% or greater.

**In** the sealant material composition of an embodiment of the present invention, two or more types of rubber are preferably used in combination. That is, a halogenated butyl rubber (for example, chlorinated butyl rubber or brominated butyl rubber) is preferably used in combination with respect to the non-halogenated butyl rubber. These rubbers mutually differ in vulcanization rate, and thus, when at least two types are used in combination, difference in the physical properties such as viscosity and elasticity occurs depending on a portion of the sealant composition (sealant layer) obtained after vulcanization due to difference in the vulcanization rates thereof. As a result, this is advantageous in that fluidity is suppressed in the relatively hard portion and sealing properties are exhibited in the relatively soft portion, and thus such performance is provided in a well-balanced, compatible manner. Note that, in a case where a combination of a non-halogenated butyl rubber and a halogenated butyl rubber is contained, the proportion of the butyl rubber (halogenated butyl rubber and non-halogenated butyl rubber) in the rubber component is preferably 10 mass% or greater, and more preferably 20 mass% or greater. Furthermore, the proportion of the butyl rubber (halogenated butyl rubber and non-halogenated butyl rubber) in the rubber component is preferably 100 mass% or less, and more preferably 90 mass% or less.

The sealant material composition according to an embodiment of the present invention is always blended with a crosslinking agent and an organic peroxide. Note that, although an organic peroxide is one type of crosslinking agents, "crosslinking agent" in an embodiment of the present invention refers to a crosslinking agent excluding an organic peroxide, and examples of the crosslinking agent include sulfur, flowers of zinc, cyclic sulfide, a resin (resin vulcanization), amine (amine vulcanization), and quinone dioxime. As the crosslinking agent excluding an organic peroxide, a crosslinking agent including a sulfur component (for example, sulfur) is particularly preferably used. The crosslinking agent and the organic peroxide are used in combination and are blended in this manner, and accordingly, adequate crosslinking for providing ensuring of sealing properties and prevention of a flow of the sealant in a compatible manner can be realized. The blended amount of the crosslinking agent is from 0.1 parts by mass to 40 parts by mass, and preferably from 0.5 parts by mass to 10 parts by mass, per 100 parts by mass of the rubber component described above. Furthermore, the blended amount of the organic peroxide is from 1 part by mass to 40 parts by mass, and preferably from 10 parts by mass to 20 parts by mass, per 100 parts by mass of the rubber component described above. When the blended amount of the crosslinking agent is less than 0.1 parts by mass, the blended amount of the crosslinking agent is identical to a blended amount in the case of including substantially no crosslinking agent, and appropriate crosslinking cannot be performed. When the blended amount of the crosslinking agent exceeds 40 parts by mass, crosslinking of the sealant material composition excessively proceeds, and sealing properties decrease. The case where the blended amount of the organic peroxide is less than 1 part by mass is equivalent to the case where substantially no organic peroxide is contained, and thus appropriate crosslinking cannot be performed. When the blended amount of the organic peroxide exceeds 40 parts by mass, crosslinking of the sealant material composition excessively proceeds, and sealing properties decrease.

When the crosslinking agent and the organic peroxide are used in combination in this manner, the ratio A/B of the blending amount A of the crosslinking agent to the blending amount B of the organic peroxide may preferably be set to from 5/1 to 1/200, and more preferably from 1/10 to 1/20. According to such a blending proportion, ensuring of sealing properties and prevention of a flow of the sealant can be provided in a better-balanced, compatible manner.

Examples of the organic peroxide include dicumyl peroxide, t-butyl cumyl peroxide, benzoyl peroxide, dibenzoyl peroxide, butyl hydroperoxide, p-chlorobenzoyl peroxide, and 1,1,3,3-tetramethylbutyl hydroperoxide. Particularly, an organic peroxide having a one-minute half-life temperature of from 100°C to 200°C is preferable, and among the specific examples described above, dicumyl peroxide and t-butyl cumyl peroxide are particularly preferable. Note that in an embodiment of the present invention, as "one-minute half-life temperature," generally, a value described in the "Organic Peroxide Catalog No. 10 Ed." from Nippon Oil & Fats Co., Ltd. is employed, and in a case where a value is not described, a value determined from thermal decomposition in an organic solvent by a method identical to a method described in the catalog is employed.

The sealant material composition of an embodiment of the present invention is blended with a liquid polymer. The liquid polymer is blended in this manner, and accordingly, the viscosity of the sealant material composition can be enhanced, and sealing properties can improve. A blended amount of the liquid polymer is from 50 parts by mass to 400 parts by mass, and more preferably from 100 parts by mass to 200 parts by mass, per 100 parts by mass of the rubber component described above. When the blended amount of the liquid polymer is less than 50 parts by mass, the effect of enhancing the viscosity of the sealant material composition cannot be obtained sufficiently. When the blended amount of the liquid polymer exceeds 400 parts by mass, a flow of the sealant cannot be prevented sufficiently.

The liquid polymer is preferably co-crosslinkable with the rubber component (butyl rubber) in the sealant material composition, and the liquid polymer is paraffin oil. Paraffin oil is used from the perspective of suppressing temperature dependency of physical properties of the sealant material composition to low. The molecular weight of the paraffin oil is 800 or greater, more preferably 1000 or greater, and even more preferably 1200 or greater and 3000 or less. The liquid polymer having large molecular weight is used in this manner, and accordingly, a shift of an oil component from the sealant layer provided in the tire inner surface to a tire main body to affect the tire can be prevented.

In the sealant material composition of an embodiment of the present invention, a crosslinking aid (vulcanization accelerator) is be blended. Crosslinking aid refers to a compound that acts as a crosslinking reaction catalyst by blending the compound with the crosslinking agent including the sulfur component. The crosslinking agent and the crosslinking aid are blended, and accordingly, the vulcanization rate can be increased, and the productivity of the sealant material composition can be enhanced. The blended amount of the crosslinking aid (vulcanization accelerator) is more than 0 parts by mass and less than 1 part by mass, and preferably from 0.1 parts by mass to 0.9 parts by mass, per 100 parts by mass of the rubber component described above. The blended amount of the crosslinking aid is reduced in this manner, and accordingly, degradation (heat degradation) of the sealant material composition can be suppressed while promoting crosslinking reaction as a catalyst. When the blended amount of the crosslinking aid is 1 part by mass or more, the effect of suppressing heat degradation cannot be obtained sufficiently. Note that crosslinking aid is a crosslinking aid that acts as a crosslinking reaction catalyst by blending the crosslinking aid with the crosslinking agent including the sulfur component as described above, and thus, when the crosslinking aid coexists with an organic peroxide instead of the sulfur component, the effect as a crosslinking reaction catalyst cannot be obtained, and a large content of the crosslinking aid needs to be used, and heat degradation is promoted.

The blended amount of the crosslinking aid is preferably from 50 mass% to 400 mass%, and more preferably from 100 mass% to 200 mass%, of the blended amount of the crosslinking agent described above. By adequately blending the crosslinking aid with the crosslinking agent as described above, a function of the crosslinking aid as a catalyst can be exhibited well, and this is advantageous in that ensuring of sealing properties and prevention of a flow of the sealant are provided in a compatible manner. When the blended amount of the crosslinking aid is less than 50 mass% of the blended amount of the crosslinking agent, fluidity decreases. When the blended amount of the crosslinking aid exceeds 400 mass% of the blended amount of the crosslinking agent, deterioration resistance performance decreases.

Examples of the crosslinking aid include sulfenamide-based, thiazole-based, thiuram-based, thiourea-based, guanidine-based, dithiocarbamate-based, aldehyde-amine-based, aldehyde-ammonia-based, imidazoline-based, and xanthogen-based compounds (vulcanization accelerators). Among these, thiazole-based, thiuram-based, guanidine-based, and dithiocarbamate-based vulcanization accelerators can be used suitably. Examples of the thiazole-based vulcanization accelerator include 2-mercaptobenzothiazole, and dibenzothiazyl disulfide. Examples of the thiuram-based vulcanization accelerator include tetramethylthiuram monosulfide, and tetramethylthiuram disulfide. Examples of the guanidine-based vulcanization accelerator include diphenylguanidine, and di-ortho-tolylguanidine. Examples of the dithiocarbamate-based vulcanization accelerator include sodium dimethyldithiocarbamate, and sodium diethyldithiocarbamate. Particularly, in an embodiment of the present invention, thiazole-based or thiuram-based vulcanization accelerators are preferably used, and variation in the performance of the sealant material composition obtained can be suppressed. Among the thiuram-based vulcanization accelerators, tetramethyl thiuram disulfide is particularly suitable due to high vulcanization accelerating effects.

Note that, for example, a compound such as quinone dioxime that actually functions as the crosslinking agent may be referred to as the crosslinking aid for the sake of convenience, but crosslinking aid in an embodiment of the present invention is a compound functioning as a catalyst of crosslinking reaction using the crosslinking agent as described above, and thus, the quinone dioxime does not correspond to the crosslinking aid in an embodiment of the present invention.

Because the sealant material composition according to an embodiment of the present invention contains at least the non-halogenated butyl rubber, while the sealant material composition imparts adequately high viscosity to the rubber component, by performing crosslinking using a combination of the crosslinking agent and the organic peroxide, adequate elasticity that does not cause a flow during travel is obtained while viscosity sufficient to obtain good sealing properties is ensured, and such performances can be provided in a well-balanced, compatible manner. Thus, when the sealant material composition is adopted in the sealant layer of the self-sealing type pneumatic tire described below, excellent sealing properties can be exhibited without causing flow of the sealant layer in traveling conditions. Furthermore, because the non-halogenated butyl rubber having a low reactivity is contained, oxidation degradation is suppressed and sealing properties are maintained, and thus good sealing properties can be exhibited for a long term.

Furthermore, the outside air (especially, oxygen) may flow into the tire during the time between penetration of a foreign material such as a nail or the like into the tire and flow of the sealant into the through-hole, and in the tire after puncture is sealed once by the sealant layer, oxidation degradation of the sealant layer tends to progress due to oxygen that had been flowed in. On the other hand, with the sealant material composition according to an embodiment of the present invention, because progression of the oxidation degradation is suppressed by the non-halogenated butyl rubber blended as described above, the sealing properties are maintained, and thus excellent sealing properties can be continuously exhibited even when a foreign material such as a nail or the like penetrates another part of the tire after the puncture is sealed once.

As illustrated in FIG. 1, the pneumatic tire according to an embodiment of the present invention includes a tread portion 1 having an annular shape extending in the tire circumferential direction, a pair of sidewall portions 2 disposed on both sides of the tread portion 1, and a pair of bead portions 3 disposed on an inner side of the sidewall portions 2 in the tire radial direction. Note that "CL" in FIG. 1 denotes a tire equator. Note that FIG. 1 is a meridian cross-sectional view, and although not illustrated, the tread portion 1, the sidewall portions 2, and the bead portions 3 each extend in the tire circumferential direction and each have an annular shape, and accordingly, a basic structure of a toroidal shape of the pneumatic tire is formed. Other tire components in the meridian cross-sectional view also extend in the tire circumferential direction to form annular shapes unless otherwise indicated.

In the example of FIG. 1, a carcass layer 4 is mounted between the pair of bead portions 3 of left and right. The carcass layer 4 includes a plurality of reinforcing cords extending in the tire radial direction, and is folded back around a bead core 5 and a bead filler 6 disposed in each of the bead portions 3 from a vehicle inner side to a vehicle outer side. Additionally, the bead filler 6 is disposed on an outer circumferential side of the bead core 5, and the bead filler 6 is enveloped by a body portion and a folded back portion of the carcass layer 4.

A plurality of belt layers 7 (two layers in FIG. 1) are embedded on an outer circumferential side of the carcass layer 4 in the tread portion 1. Among the plurality of belt layers 7, a layer having the smallest belt width is referred to as a minimum belt layer 7a, and a layer having the largest belt width is referred to as a maximum belt layer 7b. The belt layers 7 each include a plurality of reinforcing cords inclining with respect to the tire circumferential direction, and are disposed such that the reinforcing cords of the different layers intersect each other. In these belt layers 7, the inclination angle of the reinforcing cords with respect to the tire circumferential direction is set in a range of, for example, 10° or greater and 40° or less. A belt reinforcing layer 8 is provided on an outer circumferential side of the belt layers 7 in the tread portion 1. In the illustrated example, the belt reinforcing layer 8 is provided including two layers of a full cover layer covering the entire width of the belt layer 7 and an edge cover layer disposed further on an outer circumferential side than the full cover layer and covering only an end portion of the belt layer 7. The belt reinforcing layer 8 includes an organic fiber cord oriented in the tire circumferential direction, and an angle of the organic fiber cord with respect to the tire circumferential direction is set to be, for example, from 0° to 5°.

In a tire inner surface, an innerliner layer 9 is provided along the carcass layer 4. Innerliner layer 9 is a layer for preventing air in the tire from permeate outside the tire. The innerliner layer 9 includes, for example, a rubber composition including, as a main component, butyl rubber having air permeation preventing performance. Alternatively, the innerliner 9 can also include a resin layer including a thermoplastic resin as a matrix. In the case of the resin layer, a resin layer including an elastomer component dispersed in a matrix of a thermoplastic resin may be used.

As illustrated in FIG. 1, a sealant layer 10 is provided on an inner side in the tire radial direction of the innerliner layer 9 in the tread portion 1. A sealant material composition of an embodiment of the present invention is used in the sealant layer 10. The sealant layer 10 is attached to the inner surface of a pneumatic tire having the basic structure described above, and for example, when foreign material such as a nail or the like penetrates into the tread portion 1, the sealant material that forms the sealant layer 10 flows into the through-hole, which makes it possible to suppress reduction in air pressure and to maintain travel.

The sealant layer 10 has a thickness, for example, from 0.5 mm to 5.0 mm. The sealant layer 10 has this degree of thickness, and accordingly, a flow of a sealant during travel can be suppressed while ensuring good sealing properties. Additionally, good processability at the time of attaching the sealant layer 10 to the tire inner surface is also obtained. When the thickness of the sealant layer 10 is less than 0.5 mm, it becomes difficult to ensure sufficient sealing properties. When the thickness of the sealant layer 10 exceeds 5.0 mm, tire weight increases and rolling resistance degrades. Note that thickness of sealant layer 10 refers to the average thickness.

The sealant layer 10 can be formed by attaching later the sealant layer 10 to the inner surface of the vulcanized pneumatic tire. For example, the sealant layer 10 can be formed by attaching a sealant material including the sealant material composition described below and molded in a sheet shape to the entire circumference of the tire inner surface, or by spirally attaching a sealant material including the sealant material composition described below and molded in a string-like shape or a band-like shape to the tire inner surface. Additionally, at this time, the sealant material composition is heated, and accordingly, variation in the performance of the sealant material composition can be suppressed. As heating conditions, temperature may be preferably from 140°C to 180°C, and more preferably from 160°C to 180°C, and heating time may be preferably from 5 minutes to 30 minutes, and more preferably from 10 minutes to 20 minutes. According to the method for manufacturing a pneumatic tire, a pneumatic tire having excellent sealing properties when punctured and that is not prone to cause sealant flow can be efficiently manufactured.

An embodiment of the present invention will further be described below by way of Examples, but the scope of an embodiment of the present invention is not limited to Examples.

### Examples

Tires according to Comparative Examples 1 to 8, Reference Examples 1 to 13 and Examples 14 to 34 were manufactured. The tires had a tire size of 255/40R20, had the basic structure illustrated in FIG. 1, and included a sealant layer formed from a sealant on an inner side in a tire radial direction of an innerliner layer in a tread portion. The composition of the sealant material composition constituting the sealant layer was set as listed in Tables 1 to 4.

For these test tires, sealing properties (initial performance, after oxidation degradation acceleration treatment, and after heat degradation acceleration treatment) and fluidity of the sealant were evaluated by the following test methods, and the results are shown in Tables 1 to 4.

### Sealing Properties (Initial Performance)

The test tires were assembled on wheels having a rim size of 20×9J and mounted on a test vehicle, with an initial air pressure of 250 kPa and a load of 8.5 kN, a 4 mm-diameter nail was driven into the tread portion, and then the test tire was left to stand for one hour in a state in which the nail was removed. Thereafter, the air pressure was measured. The evaluation results are indicated by the following five levels.
5: Air pressure obtained after the standing is 240 kPa or greater and 250 kPa or less
4: Air pressure obtained after the standing is 230 kPa or greater and less than 240 kPa
3: Air pressure after the standing was at least 220 kPa and less than 230 kPa
2: Air pressure after the standing was at least 200 kPa and less than 220 kPa
1: Air pressure obtained after the standing is less than 200 kPa

### Sealing Properties (After Oxidation Degradation Acceleration Treatment)

The test tires were mounted on wheels having a rim size of 20×9J and mounted on a test vehicle, and acceleration treatment of oxidation degradation was performed by allowing the test tires to be left for 4 days (96 hours) in a condition where the test tires were inflated with oxygen at an air pressure of 220 kPa and at 80°C. For the test tires after the oxidation degradation acceleration treatment, with an initial air pressure of 250 kPa and a load of 8.5 kN, after a 4 mm-diameter nail was driven into the tread portion, the tire was left to stand for one hour in a state in which the nail was removed. Thereafter, the air pressure was measured. The evaluation results are indicated by the following five levels.
5: Air pressure obtained after the standing is 240 kPa or greater and 250 kPa or less
4: Air pressure obtained after the standing is 230 kPa or greater and less than 240 kPa
3: Air pressure after the standing was at least 220 kPa and less than 230 kPa
2: Air pressure after the standing was at least 200 kPa and less than 220 kPa
1: Air pressure obtained after the standing is less than 200 kPa

### Sealing Properties (After Heat Degradation Acceleration Treatment)

The test tires were mounted on wheels having a rim size of 20×9J and mounted on a test vehicle, and acceleration treatment of heat degradation was performed by allowing the test tires to be left for 30 days in a condition where the test tires were inflated with oxygen at an air pressure of 220 kPa and at 70°C. For the test tires after the heat degradation acceleration treatment, with an initial air pressure of 250 kPa and a load of 8.5 kN, after a 4 mm-diameter nail was driven into the tread portion, the tire was left to stand for one hour in a state in which the nail was removed. Thereafter, the air pressure was measured. The evaluation results are indicated by the following five levels.
5: Air pressure obtained after the standing is 240 kPa or greater and 250 kPa or less
4: Air pressure obtained after the standing is 230 kPa or greater and less than 240 kPa
3: Air pressure after the standing was at least 220 kPa and less than 230 kPa
2: Air pressure after the standing was at least 200 kPa and less than 220 kPa
1: Air pressure obtained after the standing is less than 200 kPa

### Fluidity of Sealant

The test tire was mounted on a wheel having a rim size of 20×9J, and mounted on a drum testing machine, and at an air pressure of 220 kPa, a load of 8.5 kN, and three levels of running speeds of 100 km/h, 150 km/h, and 200 km/h, running for one hour at each speed was performed, and a flow state of the sealant after the running at each speed was examined. In the evaluation results, lines of 20 × 40 squares each having a grid width of 5 mm are ruled in a surface of the sealant layer before the travel, and the number of the squares having a distorted shape after the travel is counted, and then, the case where no flow of the sealant is observed (the number of the distorted squares is 0) is indicated as "Good", the case where the number of the distorted squares is less than 1/4 of the total number of the squares is indicated as "Pass", and the case where the number of the distorted squares is 1/4 or more of the total number of the squares is indicated as "Fail".

### [Table 1]

**Table 1**

| | | Comparative Example 1 | Comparative Example 2 | Comparative Example 3 | Comparative Example 4 | Ref. Example 1 | Ref. Example 2 | Ref. Example 3 | Ref. Example 4 | Ref. EXAMPLE 5 | Ref. EXAMPLE 6 | Ref. EXAMPLE 7 |
|---|---|---|---|---|---|---|---|---|---|---|---|---|
| Non-halogenated IIR | Parts by mass | 10 | 10 | 11 | 11 | 11 | 11 | 50 | 50 | 100 | 11 | 11 |
| Halogenated IIR 1 | Parts by mass | 90 | | 89 | 89 | 89 | | 50 | | | | 89 |
| Halogenated IIR 2 | Parts by mass | | 90 | | | | 89 | | 50 | | | |
| NR | Parts by mass | | | | | | | | | | 89 | |
| Organic peroxide | Parts by mass | 10 | 10 | 0.1 | 10 | 10 | 10 | 10 | 10 | 10 | 10 | 10 |
| Crosslinking agent 1 | Parts by mass | 5 | 5 | 5 | | 5 | 5 | 5 | 5 | 5 | 5 | 5 |
| Crosslinking agent 2 | Parts by mass | | | | | | | | | | | |
| Crosslinking agent 3 | Parts by mass | | | | | | | | | | | |
| Crosslinking aid 1 | Parts by mass | | | | | | | | | | | |
| Crosslinking aid 2 | Parts by mass | 5 | 5 | 5 | 5 | 5 | 5 | 5 | 5 | 5 | 5 | |
| Crosslinking aid 3 | Parts by mass | | | | | | | | | | | 5 |
| Liquid polymer 1 | Parts by mass | 200 | 200 | 200 | 200 | 200 | 200 | 200 | 200 | 200 | 200 | 200 |
| Liquid polymer 2 | Parts by mass | | | | | | | | | | | |
| Liquid polymer 3 | Parts by mass | | | | | | | | | | | |
| Sealing properties | Initial performance | 4 | 4 | 3 | 1 | 5 | 5 | 5 | 5 | 5 | 3 | 5 |
| | After oxidation degradation acceleration treatment | 1 | 1 | 1 | 1 | 4 | 3 | 5 | 4 | 5 | 3 | 4 |
| | After heat degradation acceleration treatment | 1 | 2 | 1 | 1 | 4 | 3 | 5 | 4 | 5 | 3 | 3 |
| Fluidity | 100 km/h | Good | Good | Good | Good | Good | Good | Good | Good | Good | Good | Good |
| | 150 km/h | Good | Good | Good | Good | Good | Good | Good | Good | Good | Good | Good |
| | 200 km/h | Good | Good | Good | Good | Good | Good | Good | Good | Good | Good | Good |

### [Table 2]

**Table 2**

| | | Ref. EXAMPLE 8 | Ref. EXAMPLE 9 | Ref. EXAMPLE 10 | Ref. EXAMPLE 11 | Ref. EXAMPLE 12 | Ref. EXAMPLE 13 | EXAMPLE 14 | EXAMPLE 15 | EXAMPLE 16 | EXAMPLE 17 |
|---|---|---|---|---|---|---|---|---|---|---|---|
| Non-halogenated IIR | Parts by mass | 11 | 11 | 11 | 11 | 11 | 11 | 11 | 11 | 11 | 11 |
| Halogenated IIR 1 | Parts by mass | 89 | 89 | 89 | 89 | 89 | 89 | 89 | 89 | 89 | 89 |
| Halogenated IIR 2 | Parts by mass | | | | | | | | | | |
| NR | Parts by mass | | | | | | | | | | |
| Organic peroxide | Parts by mass | 1 | 40 | 10 | 10 | 10 | 10 | 10 | 10 | 10 | 10 |
| Crosslinking agent 1 | Parts by mass | 5 | 5 | 0.1 | 40 | 5 | 5 | 5 | 5 | 5 | 5 |
| Crosslinking agent 2 | Parts by mass | | | | | | | | | | |
| Crosslinking agent 3 | Parts by mass | | | | | | | | | | |
| Crosslinking aid 1 | Parts by mass | | | | | | | | | | |
| Crosslinking aid 2 | Parts by mass | 5 | 5 | 5 | 5 | 5 | 5 | 5 | 5 | 5 | 5 |
| Crosslinking aid 3 | Parts by mass | | | | | | | | | | |
| Liquid polymer 1 | Parts by mass | 200 | 200 | 200 | 200 | 50 | 400 | | | | |
| Liquid polymer 2 | Parts by mass | | | | | | | 200 | | 50 | 400 |
| Liquid polymer 3 | Parts by mass | | | | | | | | 200 | | |
| Sealing properties | Initial performance | 4 | 5 | 5 | 2 | 3 | 5 | 4 | 4 | 3 | 5 |
| | After oxidation degradation acceleration treatment | 3 | 5 | 5 | 2 | 2 | 4 | 4 | 4 | 2 | 5 |
| | After heat degradation acceleration treatment | 3 | 5 | 5 | 2 | 2 | 4 | 4 | 4 | 2 | 5 |
| Fluidity | 100 km/h | Good | Pass | Good | Good | Good | Pass | Good | Good | Good | Pass |
| | 150 km/h | Good | Pass | Pass | Good | Good | Pass | Good | Good | Good | Pass |
| | 200 km/h | Good | Pass | Pass | Good | Good | Pass | Good | Good | Good | Pass |

### [Table 3]

**Table 3**

| | | EXAMPLE 18 | EXAMPLE 19 | EXAMPLE 20 | EXAMPLE 21 | EXAMPLE 22 | EXAMPLE 23 | EXAMPLE 24 | Comparative Example 5 | EXAMPLE 25 | Example 26 | Example 27 |
|---|---|---|---|---|---|---|---|---|---|---|---|---|
| Non-halogenated IIR | Parts by mass | 11 | 20 | 90 | 90 | 11 | 11 | 11 | 11 | 11 | 11 | 11 |
| Halogenated IIR 1 | Parts by mass | 79 | 40 | 10 | | 79 | 79 | 79 | 79 | 79 | 79 | 79 |
| Halogenated IIR 2 | Parts by mass | 10 | 40 | | 10 | 10 | 10 | 10 | 10 | 10 | 10 | 10 |
| NR | Parts by mass | | | | | | | | | | | |
| Organic peroxide | Parts by mass | 10 | 10 | 10 | 10 | 10 | 10 | 10 | 0.5 | 10 | 10 | 10 |
| Crosslinking agent 1 | Parts by mass | 1 | 1 | 1 | 1 | 1 | 1 | | 1 | 1 | | 1 |
| Crosslinking agent 2 | Parts by mass | | | | | | | 1 | | | 1 | |
| Crosslinking agent 3 | Parts by mass | | | | | | | | 0.5 | | | |
| Crosslinking aid 1 | Parts by mass | 0.5 | 0.5 | 0.5 | 0.5 | 0.9 | 0.1 | 0.5 | | | | |
| Crosslinking aid 2 | Parts by mass | | | | | | | | | 0.5 | 0.5 | |
| Crosslinking aid 3 | Parts by mass | | | | | | | | | | | 0.5 |
| Liquid polymer 1 | Parts by mass | | | | | | | | | | | |
| Liquid polymer 2 | Parts by mass | 200 | 200 | 200 | 200 | 200 | 200 | 200 | 200 | 200 | 200 | 200 |
| Liquid polymer 3 | Parts by mass | | | | | | | | | | | |
| Sealing properties | Initial performance | 5 | 5 | 5 | 5 | 4 | 4 | 4 | 2 | 4 | 4 | 4 |
| | After oxidation degradation acceleration treatment | 4 | 4 | 5 | 5 | 3 | 4 | 3 | 1 | 4 | 4 | 4 |
| | After heat degradation acceleration treatment | 4 | 4 | 5 | 5 | 2 | 3 | 3 | 1 | 4 | 4 | 4 |
| Fluidity | 100 km/h | Good | Good | Good | Good | Good | Good | Good | Good | Good | Good | Good |
| | 150 km/h | Good | Good | Good | Good | Good | Good | Good | Good | Good | Good | Good |
| | 200 km/h | Good | Good | Good | Pass | Good | Good | Good | Good | Good | Good | Good |

### [Table 4]

**Table 4**

| | | Example 28 | Comparative Example 6 | Comparative Example 7 | Example 29 | Example 30 | Comparative Example 8 | Example 31 | Example 32 | Example 33 | Example 34 |
|---|---|---|---|---|---|---|---|---|---|---|---|
| Non-halogenated IIR | Parts by mass | 11 | | 11 | 11 | 11 | 11 | 11 | 11 | 11 | 11 |
| Halogenated IIR 1 | Parts by mass | 10 | | 79 | 79 | 79 | 10 | 10 | 10 | 79 | 79 |
| Halogenated IIR 2 | Parts by mass | 79 | | 10 | 10 | 10 | 79 | 79 | 79 | 10 | 10 |
| NR | Parts by mass | | 100 | | | | | | | | |
| Organic peroxide | Parts by mass | 10 | 10 | 0.5 | 1 | 40 | 10 | 10 | 10 | 0.5 | 0.5 |
| Crosslinking agent 1 | Parts by mass | 1 | 1 | 1 | 1 | 1 | 0.05 | 0.1 | 40 | 1 | 1 |
| Crosslinking agent 2 | Parts by mass | | | | | | | | | | |
| Crosslinking agent 3 | Parts by mass | | | | | | | | | | |
| Crosslinking aid 1 | Parts by mass | 0.9 | 0.5 | 0.5 | 0.5 | 0.5 | 0.5 | 0.5 | 0.5 | 0.5 | 0.5 |
| Crosslinking aid 2 | Parts by mass | | | | | | | | | | |
| Crosslinking aid 3 | Parts by mass | | | | | | | | | | |
| Liquid polymer 1 | Parts by mass | | | | | | | | | | |
| Liquid polymer 2 | Parts by mass | 200 | 200 | 200 | 200 | 200 | 200 | 200 | 200 | 50 | 400 |
| Liquid polymer 3 | Parts by mass | | | | | | | | | | |
| Sealing properties | Initial performance | 3 | 1 | 1 | 3 | 5 | 5 | 5 | 3 | 3 | 4 |
| | After oxidation degradation acceleration treatment | 2 | 1 | 1 | 2 | 4 | 5 | 4 | 2 | 2 | 4 |
| | After heat degradation acceleration treatment | 2 | 1 | 1 | 2 | 4 | 4 | 4 | 2 | 3 | 4 |
| Fluidity | 100 km/h | Good | Good | Good | Good | Good | Fail | Good | Good | Good | Good |
| | 150 km/h | Good | Good | Good | Good | Pass | Fail | Good | Good | Good | Pass |
| | 200 km/h | Good | Good | Good | Good | Pass | Fail | Pass | Good | Good | Pass |

Types of raw materials used in Tables 1 to 4 will be described below.
- Non-halogenated IIR: BUTYL 065 available from JSR Corporation
- Halogenated IIR 1: Chlorinated butyl rubber, CHLOROBUTYL 1066, available from JSR Corporation
- Halogenated IIR 2: Brominated butyl rubber, BROMOBUTYL 2222, available from JSR Corporation
- NR: Natural rubber available from SRI TRANG
- Organic peroxide: Dibenzoyl peroxide, NYPER NS, available from NOF Corp. (1-minute half-life
   temperature: 133°C)
- Crosslinking agent 1: Sulfur, small lumps of sulfur, available from Hosoi Chemical Industry Co., Ltd.
- Crosslinking agent 2: Cyclic sulfide, VALNOC R, available from Ouchi Shinko Chemical Industrial Co., Ltd.
- Crosslinking agent 3: Quinone dioxime, VALNOC GM, available from Ouchi Shinko Chemical Industrial Co., Ltd.
- Crosslinking aid 1: Thiazole-based vulcanization accelerator, NOCCELER MZ, available from Ouchi Shinko Chemical Industrial Co., Ltd.
- Crosslinking aid 2: Thiuram-based vulcanization accelerator, NOCCELER DM-PO available from Ouchi Shinko Chemical Industrial Co., Ltd.
- Crosslinking aid 3: Guanidine-based vulcanization accelerator, NOCCELER D, available from Ouchi Shinko Chemical Industrial Co., Ltd.
- Liquid polymer 1: Liquid butyl rubber, Kalene 800, available from Royal Elastomers (molecular weight: 36000)
- Liquid polymer 2: Paraffin oil, Diana Process PW-380, available from Idemitsu Kosan Co., Ltd. (molecular weight: 1500)
- Liquid polymer 3: Paraffin oil, Diana Process K-350, available from Idemitsu Kosan Co., Ltd. (molecular weight: 800)

As can be seen from Tables 1 to 4, the pneumatic tires of Reference Examples 1 to 13 and Examples 14 to 34 each suppressed flow of the sealant regardless of the travel speed while exhibiting good sealing properties (all of the initial performance, after the oxidation degradation acceleration treatment, and after the heat degradation acceleration treatment), and provided these performances in a well-balanced, compatible manner.

On the other hand, in Comparative Examples 1 and 2, because the blended amount of the non-halogenated butyl rubber was small, adequate sealing properties after the oxidation degradation acceleration treatment was not achieved. In Comparative Example 3, because the blended amount of the organic peroxide was small, sealing properties were degraded for both of the initial and after the oxidation degradation acceleration treatment. In Comparative Example 4, because no crosslinking agent was contained, fluidity of the sealant was degraded. In Comparative Example 5, because less than 1 part by mass of the organic peroxide was contained, sealing properties were degraded (note that, in Comparative Example 5, it is conceived that blending of quinone dioxime in place of the crosslinking aid also contributed to the reduction in the sealing properties). In Comparative Example 6, because no butyl rubber was blended, sealing properties (initial performance and after heat degradation acceleration treatment) were degraded. In Comparative Example 7, because the blended amount of the organic peroxide was small, sealing properties (initial performance and after heat degradation acceleration treatment) were degraded. In Comparative Example 8, because the blended amount of the crosslinking agent was small, fluidity for all speed conditions was degraded.

### Reference Signs List

1 Tread portion
2 Sidewall portion
3 Bead portion
4 Carcass layer
5 Bead core
6 Bead filler
7 Belt layer
8 Belt reinforcing layer
9 Innerliner layer
10 Sealant layer
CL Tire equator

## Claims

1. A sealant material composition forming a sealant layer disposed on an inner surface of a pneumatic tire, the sealant material composition comprising:
from 1 part by mass to 40 parts by mass of an organic peroxide and
from 0.1 parts by mass to 40 parts by mass of a crosslinking agent, being blended, per 100 parts by mass of a rubber component containing more than 10 mass% of a non-halogenated butyl rubber,
wherein from 50 parts by mass to 400 parts by mass of a liquid polymer is blended, per 100 parts by mass of the rubber component,
wherein the liquid polymer is paraffin oil with a molecular weight of 800 or greater, and
wherein the sealant material composition further comprises a crosslinking aid.

2. The sealant material composition according to claim 1, wherein the rubber component comprises a halogenated butyl rubber together with the non-halogenated butyl rubber.

3. The sealant material composition according to claim 1 or 2, wherein the crosslinking agent comprises a sulfur component.

4. The sealant material composition according to any one of claims 1 to 3, the crosslinking aid is a thiazole-based compound or a thiuram-based compound.

5. The sealant material composition according to any one of claims 1 to 4, wherein a blended amount of the crosslinking aid is from 50 mass% to 400 mass% of a blended amount of the crosslinking agent.

6. A pneumatic tire comprising the sealant layer formed of the sealant material composition according to any one of claims 1 to 5.

## Patentansprüche

1. Dichtungsmaterialzusammensetzung, die eine Dichtungsschicht bildet, die auf einer Innenfläche eines Luftreifens angeordnet ist, wobei die Dichtungsmaterialzusammensetzung Folgendes umfasst:
1 Massenteil bis 40 Massenteile eines organischen Peroxids und
0,1 Massenteile bis 40 Massenteile eines Vernetzungsmittels, das gemischt wird, pro 100 Massenteile einer Kautschukkomponente, die mehr als 10 Ma-% eines nicht halogenierten Butylkautschuks enthält,
wobei 50 Massenteile bis 400 Massenteile eines flüssigen Polymers pro 100 Massenteile der Kautschukkomponente gemischt werden,
wobei das flüssige Polymer ein Paraffinöl mit einem Molekulargewicht von 800 oder mehr ist, und
wobei die Dichtungsmaterialzusammensetzung des Weiteren ein Vernetzungshilfsmittel umfasst.

2. Dichtungsmaterialzusammensetzung nach Anspruch 1, wobei die Kautschukkomponente einen halogenierten Butylkautschuk zusammen mit dem nichthalogenierten Butylkautschuk umfasst.

3. Dichtungsmaterialzusammensetzung nach Anspruch 1 oder 2, wobei das Vernetzungsmittel eine Schwefelkomponente umfasst.

4. Dichtungsmaterialzusammensetzung nach einem der Ansprüche 1 bis 3, wobei das Vernetzungshilfsmittel eine Verbindung auf Thiazolbasis oder eine Verbindung auf Thiurambasis ist.

5. Dichtungsmaterialzusammensetzung nach einem der Ansprüche 1 bis 4, wobei die gemischte Menge des Vernetzungshilfsmittels 50 Ma-% bis 400 Ma-% der gemischten Menge des Vernetzungsmittels beträgt.

6. Luftreifen, der die Dichtungsschicht umfasst, die aus der Dichtungsmaterialzusammensetzung nach einem der Ansprüche 1 bis 5 gebildet ist.

## Revendications

1. Composition de matériau d'étanchéité formant une couche d'étanchéité disposée sur une surface intérieure d'un pneumatique, la composition de matériau d'étanchéité comprenant:
de 1 partie en masse à 40 parties en masse d'un peroxyde organique et
de 0,1 partie en masse à 40 parties en masse d'un agent de réticulation, mélangé pour 100 parties en masse d'un composant en caoutchouc contenant plus de 10 % en masse d'un caoutchouc butyle non halogéné,
dans laquelle de 50 parties en masse à 400 parties en masse d'un polymère liquide est mélangé, pour 100 parties en masse du composant en caoutchouc,
dans laquelle le polymère liquide est de l'huile de paraffine avec un poids moléculaire de 800 ou plus, et
dans laquelle la composition du matériau d'étanchéité comprend en outre un agent de réticulation.

2. Composition de matériau d'étanchéité selon la revendication 1, dans laquelle le composant en caoutchouc comprend un caoutchouc butyle halogéné avec le caoutchouc butyle non halogéné.

3. Composition de matériau d'étanchéité selon la revendication 1 ou 2, dans laquelle l'agent de réticulation comprend un composant soufré.

4. Composition de matériau d'étanchéité selon l'une quelconque des revendications 1 à 3, l'agent de réticulation est un composé à base de thiazole ou un composé à base de thiurame.

5. Composition de matériau d'étanchéité selon l'une quelconque des revendications 1 à 4, dans laquelle une quantité mélangée de l'agent de réticulation est de 50 % en masse à 400 % en masse d'une quantité mélangée de l'agent de réticulation.

6. Pneumatique comprenant la couche d'étanchéité formée de la composition de matériau d'étanchéité selon l'une quelconque des revendications 1 à 5.
